# FASCICULE DE BREVET EUROPEEN

(11) **EP 0 790 412 B1**
(45) Date de publication et mention de la délivrance du brevet: **27.09.2000**
(21) Numéro de dépôt: 97400150.5
(22) Date de dépôt: 23.01.1997
(51) Int. Cl.: F15B 13/042, F15B 15/28, F16K 37/00

(54) **Sélecteur de circuit hydraulique**
Hydraulische Wahlschaltung
Hydraulic circuit selector

(30) Priorité: 02.02.1996 FR 9601520
(43) Date de publication de la demande: 20.08.1997
(73) Titulaire: KSB S.A., 92230 Gennevilliers (FR)
(72) Inventeur: Courcel, Jean-Claude, 33140 Villenave d'Ornon (FR); Garrigues, Jean-Claude, 33140 Cadaujac (FR); Lavidalie, Bruno, 33230 Lagorce (FR); Raffaillac, Jean-Paul, 17360 St. Aigulin (FR)
(74) Mandataire: Eidelsberg, Victor Albert

(56) Documents cités:
- EP-A- 0 500 162
- WO-A-92/19871
- DE-A- 1 601 752
- DE-A- 3 322 912
- DE-B- 1 231 518
- DE-B- 1 232 425
- US-A- 3 415 284

## Description

### Domaine technique

L'invention concerne un sélecteur de circuit hydraulique, connecté d'une part à un premier circuit hydraulique de source d'énergie à haute pression et de réseau a basse pression de sens inverse et d'autre part à un deuxième circuit hydraulique d'un consommateur de pression différentielle de sens réversible, avec un compteur volumétrique d'un fluide hydraulique de commande du consommateur.

Les processus automatisés pour le contrôle des fluides véhiculés par des tuyauteries nécessitent l'utilisation de robinets motorisés automatiques. Le bon déroulement du processus suppose la bonne réalisation des séquences d'ouverture, fermeture ou mise en position des robinets. La manoeuvre des robinets est généralement assurée par des actionneurs utilisant des sources d'énergie diverses. Toutefois, la maîtrise du processus est subordonnée d'une part, à l'exécution des ordres de manoeuvre et, d'autre part, au contrôle de la bonne exécution de ces ordres, notamment en contrôlant la position des obturateurs des robinets.

### Etat de la technique

En général, la motorisation des robinets fait appel à des actionneurs, électriques, pneumatiques, hydrauliques ou mécaniques. Le contrôle de position, quant à lui, est généralement assuré par une détection de position de l'arbre de l'obturateur en utilisant des capteurs de position généralement électriques, p.ex. un contact fin de cours ou un potentiomètre.

Ceci implique pour l'installateur, de relier le poste de commande au robinet avec une alimentation en énergie (électrique, pneumatique, hydraulique), avec une liaison permettant la commande (commande de relais de distributeur pneumatique ou hydraulique) et avec une liaison permettant le contrôle de position.

Souvent, pour la facilité, le coût et les possibilités offertes, ces deux dernières liaisons sont électriques. Ce principe de commande et de contrôle permet d'avoir un bon contrôle du processus. Toutefois, selon l'environnement du matériel, l'utilisation du matériel électrique n'est pas possible: c'est le cas notamment lorsqu'il faut utiliser le matériel en zone hostile, risques d'explosion ou immersion dans des produits.

Dans ces situations, il est fait appel soit à des matériels électriques conçus et éprouvés spécialement pour les ambiances dangereuses, qui sont généralement très coûteux, soit à des matériels n'utilisant pas l'électricité, par exemple hydraulique ou pneumatique.

C'est le cas notamment sur les pétroliers où les actionneurs à commande hydraulique sont souvent immergés dans les ballasts ou citernes cargaison, les électrodistributeurs de commande situés sur le pont en zone explosive, la partie puissance, centrale hydraulique et pupitre de commande, étant eux en zone sûre.

Si les fonctions "commande" et "actionneur" sont parfaitement remplies, il n'en est pas de même pour le "contrôle de position" qui utilise souvent, dans ce cas, un compteur volumétrique associé à l'électrodistributeur pour compter et décompter le volume d'huile envoyé dans le vérin hydraulique de l'actionneur. La position de l'obturateur étant directement liée au déplacement du piston du vérin, le comptage du volume envoyé dans une des chambres du vérin permet, grâce à l'indicateur de volume du compteur, de connaître la position de l'obturateur lors de la manoeuvre dans une direction. Le décomptage du volume en retour du vérin permet de connaître la position de l'obturateur lors du mouvement inverse.

Selon l'état de la technique le débitmètre est monté dans une branche du circuit hydraulique reliant le vérin hydraulique à un sélecteur de circuit hydraulique de sens réversible. Ce sélecteur réalise au moins trois états différents du circuit hydraulique. Premièrement, il permet l'écoulement du fluide à haute pression dans une chambre de travail du vérin pour pousser le piston. Ce mouvement du piston agit sur la deuxième chambre de travail à l'opposé du piston et le fluide compris dans cette chambre est déplacé vers le bac à basse pression. Deuxièmement, après la fin du mouvement le sélecteur met le circuit hydraulique en repos à basse pression. Troisièmement, le circuit hydraulique de sens réversible permet de charger la deuxième chambre de travail du vérin d'une haute pression pour provoquer un mouvement inverse du piston.

Ce principe simple ne peut, malheureusement, fonctionner de manière satisfaisante que sous certaines conditions:
- petite différence de pression d'huile entre l'aller et le retour,
- petite distance et petit volume des tuyauteries entre le compteur et le vérin,
- petites variations de température.

Ces conditions idéales sont rarement rencontrées et la mesure du volume effectuée par le compteur est largement entachée d'erreurs. D'une part, la variation du volume d'huile à l'aller par rapport au retour due à la différence de pression existant entre l'aller (pression motrice relativement grande) et le retour (pression de retour au bac relativement petite) n'est plus négligeable vu la pression différentielle qui peut atteindre plus de 100 bars.

D'autre part, la variation du volume des tuyauteries due à la différence de pression expliquée au point précédent devient importante, surtout pour de longues distances.

Par ailleurs, à l'arrêt toute variation de volume entre le compteur et le vérin peut entraîner une dérive du capteur, sans qu'il y ait déplacement du piston et de l'obturateur. Cette variation est due notamment aux variations de température, ce qui est fréquent sur un pont de navire entre le jour et la nuit par exemple, aux fuites internes éventuelles du vérin ou des raccords de l'installation et aux variations de pression de la centrale hydraulique si elle maintient sous pression la ligne du compteur alors que le robinet est à l'arrêt.

Ces inconvénients sont palliés dans l'art antérieur, et notamment dans le document WO 92/19871 en plaçant le compteur volumétrique dans un troisième circuit hydraulique à pression approximativement constante, le sélecteur de circuit hydraulique mettant toujours le même côté de pression du consommateur en communication avec le troisième circuit hydraulique du compteur volumétrique.

Cela permet de réaliser une mesure d'un volume de fluide rigoureusement identique lors de la manoeuvre dans une direction et lors de la manoeuvre inverse.

On a ainsi une indication fiable de l'état du consommateur, p.ex. de l'ouverture d'un robinet.

Selon un mode de réalisation, le troisième circuit hydraulique est mis en communication avec le côté basse pression lors de la manoeuvre du consommateur. Cela permet de réaliser cette mesure de volume sans qu'elle soit perturbée par la variation de la pression motrice de la centrale.

Selon un autre mode de réalisation, le troisième circuit est isolé à l'arrêt du consommateur. Par cela, le compteur est isolé des conduits reliant la centrale hydraulique au consommateur dans les phases où le consommateur est à l'arrêt de telle sorte que toute variation de volume due aux fuites internes ou aux variations de température n'aie aucune influence sur l'indicateur du compteur à l'arrêt.

Pour encore augmenter la fiabilité du compteur, le sélecteur met d'abord le troisième circuit hydraulique en communication avec le côté basse pression du second circuit avant d'ouvrir le côté haute pression du second circuit hydraulique du consommateur.

Les sélecteurs hydrauliques de ce genre présentent cependant des inconvénients. Les différentes fonctions réalisées par le schéma hydraulique décrit dans le document WO 92/19871 sont obtenues au moyen d'un assemblage de composants, notamment de composants du commerce, de sorte que le dispositif suivant l'art antérieur est encombrant et ne se présente pas sous la forme d'un bloc sélecteur robuste, peu encombrant et intégrant les différentes fonctions.

La présente invention vise ainsi un bloc sélecteur hydraulique, qui, connecté d'une part à un premier circuit hydraulique de source d'énergie à haute pression, et d'autre part à un deuxième circuit hydraulique d'un consommateur de pression différentielle de sens inverse, par un capteur de débit ou un compteur volumétrique d'un fluide hydraulique de commande du consommateur, intègre, selon un assemblage robuste et peu encombrant, les fonctions qui consistent à placer le capteur de débit dans un troisième circuit hydraulique à pression sensiblement constante, le sélecteur mettant toujours le même côté de pression du consommateur en communication avec le troisième circuit hydraulique du capteur de débit ou du compteur volumétrique, à mettre le troisième circuit hydraulique en communication avec le côté basse pression lors de la manoeuvre du consommateur, à isoler le troisième circuit hydraulique à l'arrêt du consommateur, et à mettre d'abord le troisième circuit hydraulique en communication avec le côté basse pression du second circuit hydraulique avant d'ouvrir le côté haute pression du second circuit hydraulique du consommateur.

L'invention vise un bloc sélecteur de circuit hydraulique qui comprend un corps dans lequel des parois définissent sept chambres successives adjacentes; la première chambre communiquant d'une part avec un premier conduit d'un premier circuit hydraulique et, d'autre part, avec la deuxième chambre, par un deuxième conduit,
la deuxième chambre communiquant en outre avec un troisième conduit d'un deuxième circuit hydraulique et avec la troisième chambre par une première ouverture commune en forme de siège,
la troisième chambre communiquant en outre avec un quatrième conduit d'un troisième circuit hydraulique et avec la quatrième chambre par une deuxième ouverture commune en forme de siège,
la quatrième chambre communiquant en outre avec un cinquième conduit menant à un bac de centrale hydraulique et avec la cinquième chambre par une troisième ouverture commune en forme de siège,
la cinquième chambre communiquant en outre avec un sixième conduit du troisième circuit hydraulique et avec la sixième chambre par une quatrième ouverture commune en forme de siège,
la sixième chambre communiquant en outre avec un septième conduit du deuxième circuit hydraulique et avec la septième chambre par un huitième conduit,
la septième chambre communiquant en outre avec un neuvième conduit du premier circuit hydraulique,
un coulisseau s'étendant de la première à la septième chambre en passant par les autres chambres, ce coulisseau ayant une tige transversale et deux parties de section transversale plus grande que la section transversale de la tige,
un premier obturateur dans la deuxième chambre, coulissant sur le coulisseau, et maintenu par des premiers moyens élastiques dans une position dans laquelle il obture la première ouverture commune entre la deuxième et la troisième chambres,
un deuxième obturateur dans la sixième chambre, coulissant sur le coulisseau, et maintenu par des deuxièmes moyens élastiques dans une position dans laquelle il obture la quatrième ouverture commune entre la cinquième et la sixième chambres, des troisième et quatrième obturateurs dans la quatrième chambre, coulissant sur le coulisseau et maintenus par des troisièmes moyens élastiques dans une position dans laquelle le troisième obturateur obture la deuxième ouverture commune entre la troisième et la quatrième chambres et le quatrième obturateur obture la troisième ouverture commune entre la quatrième et la cinquième chambres,
les deuxième et huitième conduits faisant communiquer la première et la seconde chambre et la sixième et la septième chambre étant ménagés dans le coulisseau,
les parties du coulisseau de sections transversales plus grandes étant disposées dans un premier état de repos respectivement dans les troisième et cinquième chambres et étant montées de manière que, lors du déplacement du coulisseau dans le sens allant de la première à la septième chambres, elles poussent respectivement à l'encontre des deuxièmes et troisièmes moyens élastiques le troisième et le deuxième obturateurs de manière à ouvrir les ouvertures et, lors du déplacement du coulisseau allant de la septième à la première chambres, elles poussent respectivement à l'encontre des premiers et troisièmes moyens élastiques le premier et le quatrième obturateurs de manière à ouvrir les premières et deuxièmes ouvertures, des moyens de poussée étant prévus dans la première et la septième chambres pour, sous l'effet de la pression d'un fluide, entrant par le premier conduit, respectivement le neuvième conduit, d'une part empêcher l'accès à la deuxième chambre (respectivement sixième chambre) en fermant le deuxième conduit, respectivement le huitième conduit, et, d'autre part, pousser le coulisseau dans le sens de la première à la septième chambres, respectivement septième à première chambre.

Suivant un mode de réalisation préféré, les moyens de poussée comportent, dans chacune des première et septième chambres, un vérin muni d'une ouverture de vérin et d'une butée qui font partie des moyens de poussée et un clapet, l'ouverture de vérin permettant de guider le clapet, ce dernier, sous l'effet de la pression du fluide dans la première chambre, respectivement septième chambre, venant fermer le deuxième conduit, respectivement le huitième conduit, et la butée de vérin, poussant le clapet contre le coulisseau pour ainsi déplacer le coulisseau dans le sens allant de la première à la septième chambre, respectivement de la septième à la première chambre, jusqu'à une troisième butée, respectivement quatrième butée. De préférence, le bloc sélecteur est symétrique comme dans un miroir par rapport à un plan médian de la quatrième chambre, les deuxième et huitième conduits sont en forme de T et le coulisseau est en deux pièces

### Présentation des différentes figures

Les dessins annexés illustrent l'invention réalisée pour manoeuvrer un robinet à papillon dans le sens ouverture ou fermeture, c'est-à-dire d'une position finale à l'autre. L'invention permet aussi des positions intermédiaires.
- La figure 1: représente en coupe le sélecteur intégré dans un schéma de manoeuvre de circuits hydrauliques.
- La figure 2: représente en coupe l'agrandissement du sélecteur en position "repos".
- La figure 3: représente en coupe l'agrandissement du sélecteur dans une première phase de mise sous pression, mettant en communication le compteur volumétrique avec le côté basse pression du consommateur.
- La figure 4: représente une deuxième phase de déplacement du coulisseau.
- La figure 5: représente une troisième phase de déplacement du coulisseau pour mettre en communication le côté haute pression du premier circuit avec le consommateur.

### Modes de réalisation

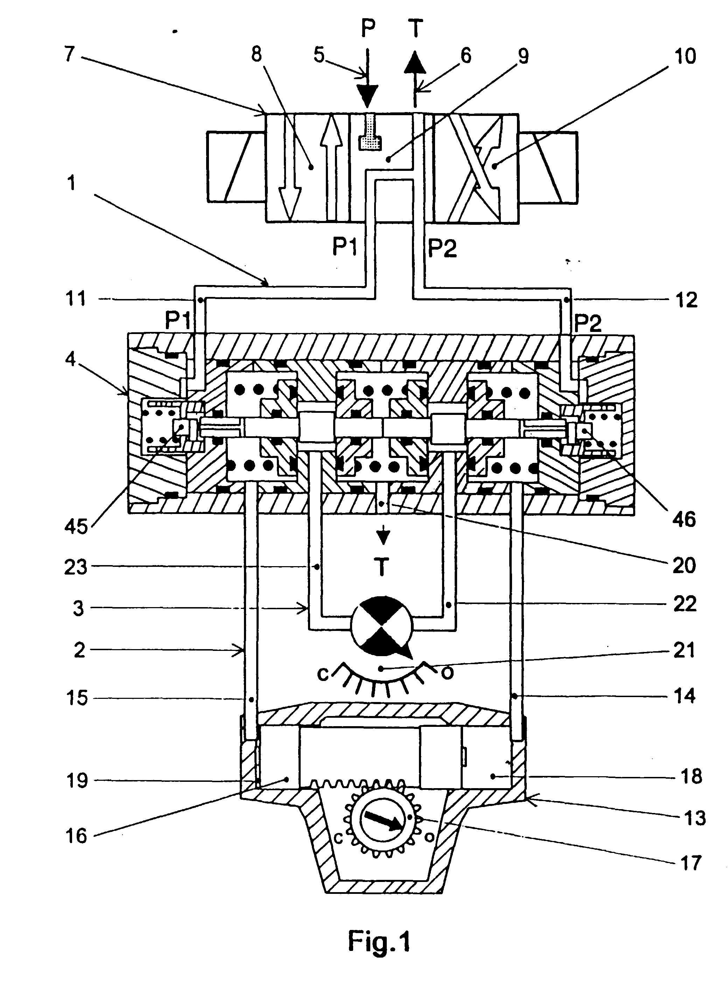

Dans la figure 1 sont représentés trois circuits hydrauliques (1,2,3) reliés par le sélecteur de circuit hydraulique 4. Le premier circuit hydraulique 1 comprend un côté haute pression 5 d'une source d'énergie, par exemple une centrale hydraulique, et un côté basse pression 6 de réseau, par exemple de retour au bac de la centrale hydraulique. La flèche P désigne la direction d'un écoulement d'un fluide, p.ex. huile, sous haute pression vers un distributeur hydraulique 7 prévu pour inverser le sens de la pression différentielle dans le premier circuit hydraulique 1, la flèche T désigne le retour au bac. On reconnaît trois états différents 8,9,10 de mise sous pression du sélecteur 4 par le distributeur 7 dans le premier circuit 1.

Dans l'état représenté 9 on reconnaît une position nommée repos où le distributeur 7 coupe le côté haute pression 5 du premier circuit 1 et met le sélecteur 4 en communication par des conduits 11,12 avec le côté basse pression 6 du retour au bac. Dans ce cas, aucune énergie de manoeuvre n'est fournie par le premier circuit 1 au sélecteur 4.

Dans les états 8,10 le distributeur 7 soumet le sélecteur 4 à une pression différentielle transmise par les conduits 11,12 indiquée par les pressions P1,P2. Dans l'état 8 P1 est plus grande que P2, dans l'état 10 on trouve la situation inverse. P2 étant supérieure à P1.

Le deuxième circuit hydraulique 2 relie le sélecteur 4 à un consommateur d'énergie 13 en forme d'un vérin d'un actionneur par des conduits 14,15. Dans le vérin 13 il y a un piston à crémaillère 16 coopérant avec un arbre denté 17 d'un dispositif d'arrêt, p.ex. un robinet, non représenté. Le vérin 13 est un vérin à double effet avec des chambres de travail 18,19 de chaque côté du piston 16. Dans l'état de repos représenté, les conduits 14,15 sont en communication avec le distributeur 7 à travers le sélecteur 4 et donc soumis à la basse pression. Aucune force motrice n'est exercée sur le piston par les circuits hydrauliques 1,2,3.

Dans l'état 8 du distributeur 7, le conduit 15 soumet la chambre de travail 19 à une haute pression pendant que la pression dans la chambre de travail 18 reste basse.

La différence de pression dans les chambres de travail 18,19 applique une force motrice sur le piston 16 qui se déplace en entraînant en rotation l'arbre 17. Dû à la rotation de l'arbre le dispositif d'arrêt change son état "ouvert" en état "fermé". Le mouvement du piston 16 déplace le fluide à basse pression dans la chambre de travail 18 vers le sélecteur 4 à travers le conduit 14 et le fluide sort du sélecteur 4 par l'ouverture 20 vers le bac, indiqué par la flèche T. Dans l'état 10 du distributeur 7 le mouvement du piston 16 est inversé.

Le troisième circuit hydraulique 3 relie un capteur de débit ou un compteur volumétrique 21 au sélecteur 4 par des conduits 22,23. Dans l'état 9 représenté, le circuit 3 est barré, il n'y a aucun écoulement dans les conduits 22,23 et le compteur 21 est isolé du premier et deuxième circuit hydraulique 1,2. Grâce à l'isolement du compteur, celui-ci ne peut pas dériver. Dans l'état 8 ou 10 l'écoulement venant de la chambre de travail à basse pression passe d'abord par le troisième circuit hydraulique 3 et par le compteur volumétrique 21 avant de sortir du sélecteur 4 par l'ouverture 20 vers le bac. Ainsi, c'est toujours le fluide à basse pression qui est pris en compte pour mesurer le volume déplacé et pour indiquer ou calculer l'état du consommateur 13.

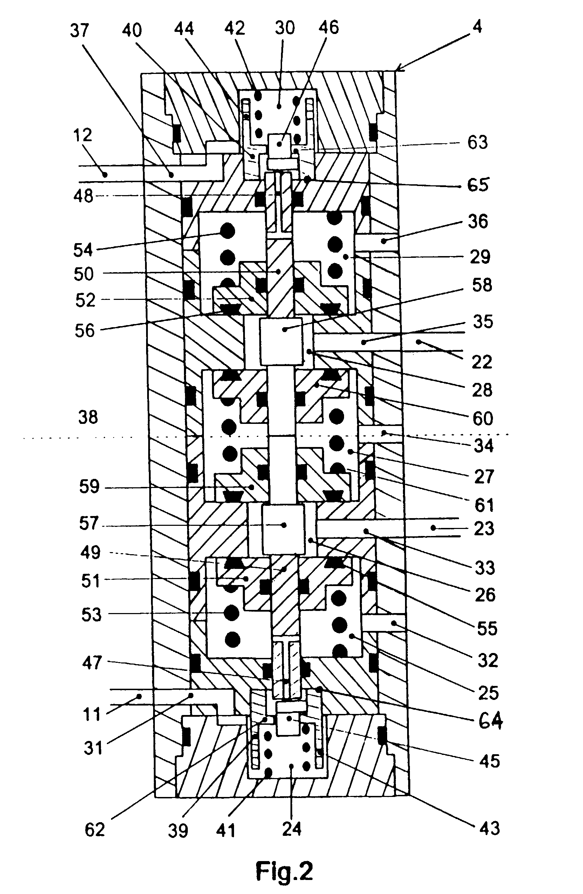

A l'état 9 du distributeur 7, représenté dans la figure 1, le distributeur étant en position neutre, on voit dans la figure 2 la position repos des pièces internes du sélecteur, lorsque le vérin 13 est à l'arrêt et le dispositif d'arrêt est soit en "position pleine ouverture", soit en "position pleine fermeture", soit en "position intermédiaire".

A l'intérieur du sélecteur 4 on trouve sept chambres 24-30 en communication directe avec des conduits 11,12; 14,15; 20; 22,23 des trois circuits hydrauliques 1,2,3 par des canaux 31-37. Chaque chambre n'est en communication qu'avec un seul conduit, il s'agit donc d'une relation 1:1 entre les chambres et les conduits. Le sélecteur 4 est symétrique à un axe de symétrie 38, ses composants étant arrangés en symétrie par rapport à cet axe 38.

Le canal 31,37 est relié au conduit 11,12 du premier circuit hydraulique 1 et débouche dans la chambre 24,30. Dans la chambre 24,30 il y a un vérin 39,40 partiellement creux pour recevoir un ressort 41,42. Des ouvertures 43,44 facilitent le passage du fluide à l'intérieur du vérin 39,40. En état de repos le ressort 41,42 presse le vérin 39,40 contre le corps du sélecteur 4.

Le vérin 39,40 reçoit dans une ouverture centrale une pièce mobile fonctionnant comme un clapet 45,46 pour ouvrir et fermer un passage 47,48 dans un coulisseau 49,50 en forme de tige. Pour limiter le mouvement axial du clapet 45,46, une butée 62,63 est prévue au vérin. Comme on verra plus tard, le clapet 46 est pressé contre cette butée 63 et provoque finalement le mouvement du vérin 40 contre la force du ressort 42. Le passage 47, 48 aboutit dans la chambre 25,29. La chambre 25,29 est en communication avec le conduit 14,15 du second circuit hydraulique par le canal 32,36.

Dans la chambre 25,29 se trouve un obturateur 51,52 appuyé contre le corps du sélecteur par un ressort 53,54 et muni d'un joint d'étanchéité 55,56 pour assurer une étanchéité entre la chambre 25,29 et la chambre 26,28. L'obturateur 51,52 est traversé de manière étanché par le coulisseau 49,50.

La chambre 26,28 est en communication avec le conduit 22,23 du troisième circuit hydraulique 3 par le canal 33,35. Le coulisseau 49,50 comporte une partie de section augmenté 57,58 capable de fonctionner comme butée pour les clapets 51,52, d'une part, et des clapets 59,60 dans la chambre 27, d'autre part, pendant des phases d'opérations différentes.

Dans la chambre 27 en communication avec le conduit de retour au bac par le canal 34 les clapets 59,60 sont placés dos à dos et un ressort d'écartement 61 est placé entre les clapets 59,60. C'est dans cette chambre 27 où les coulisseaux 49,50 s'appuient l'un contre l'autre que se trouve l'axe de symétrie 38.

L'ensemble des pièces du sélecteur est dimensionné de telle manière, qu'à l'état de repos représenté, les conduits 14,15 peuvent se décharger vers le bac (T) à travers le sélecteur 4 par les conduits 11,12. Le fluide entre dans le sélecteur 4 par le canal 32,36, traverse la chambre 25,29 pour arriver au passage 47,48 du coulisseau 49,50. Le fluide sort du passage 47, 48 dans la chambre 24,30 après avoir passé les clapets 45 et 46 autorisant le passage du fluide. Le fluide sort de la chambre 24,30 en communication avec les conduits 11,12 par le canal 31,37 pour quitter le sélecteur 4.

Quant au troisième circuit hydraulique 3 du compteur, il est bloqué par l'appui étanche des clapets 51,52; 59,60. Aucun fluide ne peut sortir des conduits 22,23. Le compteur 21 est isolé et ne peut donc dériver.

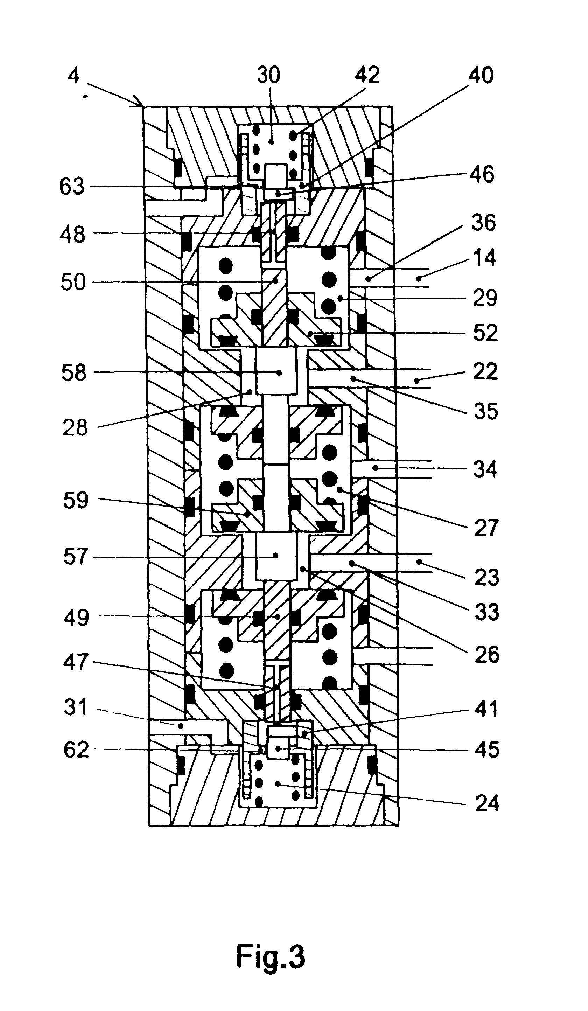

Le fonctionnement du module se décompose en 3 phases lors du basculement du distributeur. Les figures 3 à 5 décrivent les 3 phases lors d'une manoeuvre "fermeture" d'un dispositif d'arrêt.

Pendant la première phase (voir figure 3) la pression P, en provenance du distributeur 7 arrive au canal 31 et soumet la chambre 24 sous pression. Cette pression pousse le clapet 45 contre le coulisseau 49 et le clapet 45 assure l'étanchéité avec le coulisseau 49 et interdit le passage du fluide vers la chambre 25 par le passage 47. Suite à la différence de pression des deux côtés des coulisseaux 49,50, les coulisseaux se déplacent ouvrant les clapets 59 et 52 jusqu'à ce que le clapet 46 arrive en butée 63 sur le vérin 40 retenu par les ressort 42. Les clapets 52,59 sont déplacés par l'appui des parties 57, 58 des coulisseaux 49,50.

A cet état là, la chambre de travail 18 du vérin consommateur 13 est en communication avec le bac par le conduit 14, le canal 36, la chambre 29, la chambre 28, le canal 35, le conduit 22, le compteur 21, le conduit 23, le canal 33, la chambre 26, la chambre 27 et le canal 34.

Le troisième circuit hydraulique est donc branché. Comme le clapet 46 ferme le passage 48 du coulisseau 50, tout le fluide sortant de la chambre de travail 18 doit passer par le compteur volumétrique 21 du troisième circuit 3.

Jusqu'à maintenant le fluide à haute pression à l'entrée du sélecteur 4 ne peut pas encore quitter la chambre 24 vers le consommateur 13, car le passage 47 est fermé.

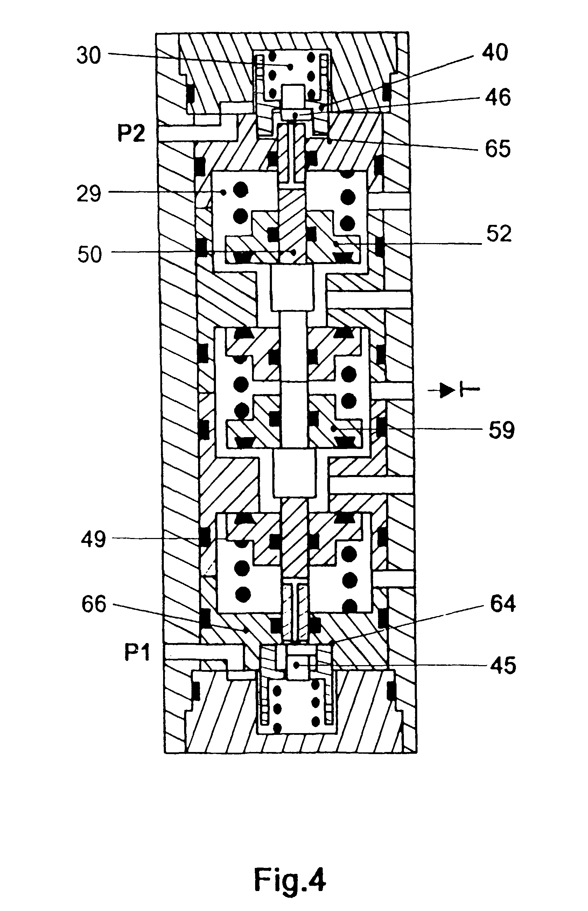

Dans la deuxième phase (voir figure 4), le coulisseau 49,50 poursuit son déplacement, accentuant l'ouverture des clapets 59 et 52 et comprime le vérin 40 qui assure une certaine pression d'étanchéité du clapet 46 interdisant tout passage de fluide de la chambre 29 vers la chambre 30 à travers le passage 48.

Le déplacement du coulisseau 49,50 se poursuit jusqu'à ce que le clapet 45 vienne en butée 64 sur sa face d'appui au corps du sélecteur.

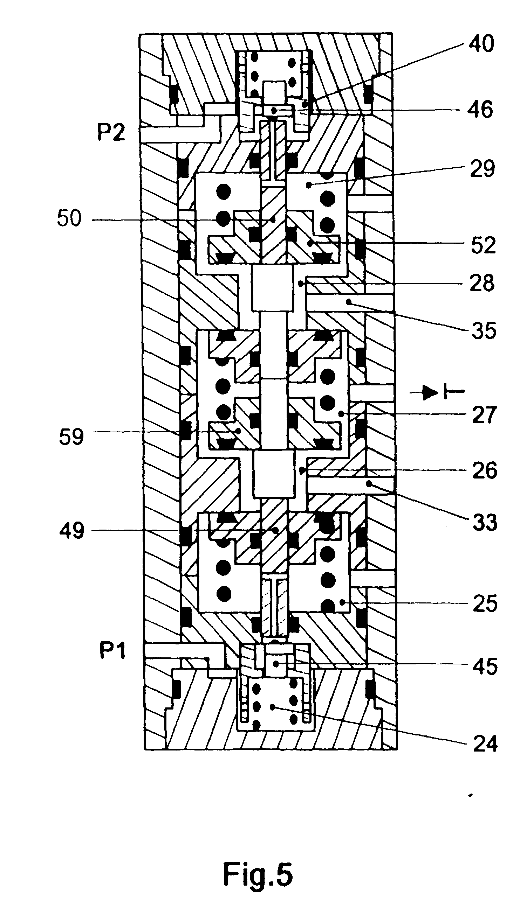

Dans la troisième phase (voir figure 5), le coulisseau 49, 50 poursuit son déplacement, accentuant l'ouverture des clapets 59 et 52, comprime totalement le vérin 40 qui, venant en butée, assure l'étanchéité du clapet 46. Le clapet 45 étant en butée 64 sur la face d'une chemise d'extrémité 66 laisse passer le fluide sous haute pression de la chambre 24 vers la chambre 25 assurant le fonctionnement de l'actionneur. Le retour du consommateur s'effectue de la chambre 29 vers la chambre 28 et le canal 35, traverse le compteur, ressort par le canal 33 et s'écoule à travers les chambres 26,27 vers le bac (T).

Lorsque le distributeur de commande 7 retrouve la position centrale de repos 9, le sélecteur de circuit hydraulique 4 retrouve sa position repos représentée par la figure 2.

Quant à la construction du sélecteur il est nécessaire pour le bon fonctionnement de tenir compte des jeux pour déplacer correctement les coulisseaux 49,50 et pour la fermeture correcte des clapets et obturateurs. Le coulisseau 49,50 possède des joints d'étanchéité pour maintenir une pression différentielle dans les chambres différentes. Le sélecteur 4 est composé de plusieurs segments étanchéifiés contre un corps.

Pour une manoeuvre "ouverture", le fonctionnement est identique avec l'admission de la pression P dans le conduit 12 au lieu du conduit 11 et un déplacement inverse des clapets et du coulisseau.

L'analyse des figures montre que le compteur ne mesure que les volumes d'huile en retour du vérin 13 vers le bac, respectivement venant de la chambre 19 ou 18 du vérin 13 selon que l'on "ouvre" ou que l'on "ferme" le robinet. La mesure de ce volume se fait dans les deux cas à la même pression, pression égale à la perte de charge de la tuyauterie retour entre le compteur 21 et le bac T.

En position repos, le compteur 21 est complètement isolé des conduits 11,12; 14,15 allant du distributeur 7 au vérin 13. Toute variation de volume pour quelque raison que ce soit, ne peut pas être comptée par le compteur, ni modifier la position de son indicateur.

En position repos, les conduits 11,12; 14,15 allant du distributeur 7 au vérin 13 restent ouvertes vers le bac, en conséquence les variations du volume de fluide dans les conduits 11,12; 14,15 dues aux variations de température peuvent s'évacuer vers le bac sans provoquer d'augmentation de pression dans le vérin 13 et sans risque de provoquer un déplacement intempestif du piston 16 dans le cas d'une variation de pression différentielle.

### Application industrielle

Le sélecteur hydraulique selon l'invention peut être utilisé pour la commande et le contrôle de position des actionneurs des robinets et autres, p.ex. pour un dispositif de robinetterie comportant un obturateur à rotation d'un quart de tour.

## Revendications

1. Bloc sélecteur de circuit hydraulique, caractérisé en ce qu'il comprend
un corps dans lequel des parois définissent sept chambres (24,25,26,27,28,29,30) successives adjacentes; la première chambre (24) communiquant d'une part avec un premier conduit (11) d'un premier circuit (1) hydraulique et, d'autre part, avec la deuxième chambre (25), par un deuxième conduit (47),
la deuxième chambre (25) communiquant en outre avec un troisième conduit (32) d'un deuxième circuit (2) hydraulique et avec la troisième chambre (26) par une première ouverture commune en forme de siège,
la troisième chambre (26) communiquant en outre avec un quatrième conduit (33) d'un troisième circuit (3) hydraulique et avec la quatrième chambre (27) par une deuxième ouverture commune en forme de siège,
la quatrième chambre (27) communiquant en outre avec un cinquième conduit (34) menant à un bac (T) de centrale hydraulique et avec la cinquième chambre (28) par une troisième ouverture commune en forme de siège,
la cinquième chambre (28) communiquant en outre avec un sixième conduit (35) du troisième circuit (3) hydraulique et avec la sixième chambre (29) par une quatrième ouverture commune en forme de siège,
la sixième chambre (29) communiquant en outre avec un septième conduit (36) du deuxième circuit (2) hydraulique et avec la septième chambre (30) par un huitième conduit (48),
la septième chambre (30) communiquant en outre avec un neuvième conduit (12) du premier circuit (1) hydraulique,
un coulisseau (49,50) s'étendant de la première à la septième chambre en passant par les autres chambres, ce coulisseau ayant une tige transversale et deux parties (57,58) de section transversale plus grande que la section transversale de la tige,
un premier obturateur (51) dans la deuxième chambre (25), coulissant sur le coulisseau (49), et maintenu par des premiers moyens (53) élastiques dans une position dans laquelle il obture la première ouverture commune entre la deuxième et la troisième chambres,
un deuxième obturateur (52) dans la sixième chambre (29), coulissant sur le coulisseau (50), et maintenu par des deuxièmes moyens (54) élastiques dans une position dans laquelle il obture la quatrième ouverture commune entre la cinquième et la sixième chambres, des troisième et quatrième obturateurs (59,60) dans la quatrième chambre (27), coulissant sur le coulisseau (49,50) et maintenus par des troisièmes moyens (61) élastiques dans une position dans laquelle le troisième obturateur (59) obture la deuxième ouverture commune entre la troisième et la quatrième chambres et le quatrième obturateur (60) obture la troisième ouverture commune entre la quatrième et la cinquième chambres,
les deuxième et huitième conduits (47,48) faisant communiquer la première et la seconde chambre et la sixième et la septième chambre étant ménagés dans le coulisseau (49,50),
les parties (57, 58) du coulisseau (49,50) de sections transversales plus grandes étant disposées dans un premier état de repos respectivement dans les troisième et cinquième chambres et étant montées de manière que, lors du déplacement du coulisseau dans le sens allant de la première à la septième chambres, elles poussent respectivement à l'encontre des deuxièmes et troisièmes moyens (54,61) élastiques le troisième et le deuxième obturateurs (59,52) de manière à ouvrir les ouvertures et, lors du déplacement du coulisseau allant de la septième à la première chambres, elles poussent respectivement à l'encontre des premiers et troisièmes moyens (53,61) élastiques le premier et le quatrième obturateurs (51,60) de manière à ouvrir les première et deuxième ouvertures, des moyens de poussée (39,40,62,63,45,46) étant prévus dans la première et la septième chambres pour, sous l'effet de la pression d'un fluide, entrant par le premier conduit (11), respectivement le neuvième conduit (12), d'une part empêcher l'accès à la deuxième chambre, respectivement sixième chambre, en fermant le deuxième conduit (47), respectivement le huitième conduit (48), et, d'autre part, pousser le coulisseau (49,50) dans le sens de la première à la septième chambres, respectivement septième à première chambre.

2. Bloc sélecteur suivant la revendication 1, caractérisé en ce que les moyens (39,40;62,63;45,46) comportent, dans chacune des première et septième chambres, un vérin (39,40), muni d'une ouverture de vérin et d'une butée (62,63) de vérin qui font partie des moyens de poussée et un clapet (45,46), l'ouverture de vérin permettant de guider le clapet (45,46), ce dernier, sous l'effet de la pression du fluide dans la première chambre (24), respectivement septième chambre (30), venant fermer le deuxième conduit (47), respectivement le huitième conduit (48), et la butée (62,63) de vérin poussant le clapet (45,46), contre le coulisseau (49,50) pour ainsi déplacer le coulisseau dans le sens allant de la première à la septième chambre, respectivement de la septième à la première chambre, jusqu'à une troisième butée (64), respectivement une quatrième butée (65).

3. Bloc sélecteur suivant la revendication 1 ou 2, caractérisé en ce que le bloc sélecteur est symétrique comme dans un miroir par rapport à un plan médian de la quatrième chambre.

4. Bloc sélecteur suivant la revendication 1, 2 ou 3, caractérisé en ce que les deuxième et huitième conduits (47,48) sont en forme de T.

5. Bloc sélecteur suivant l'une des revendications précédentes, caractérisé en ce que le coulisseau est en deux pièces.

## Patentansprüche

1. Hydraulische Wahlschaltung, gekennzeichnet durch folgende Merkmale:
Ein Baukörper, in dem durch Wände sieben aufeinanderfolgende und aneinander angrenzende Kammern (24,25,26,27,28,29,30) gebildet sind, wobei die erste Kammer (24) einerseits mit einer ersten Leitung (11) eines ersten hydraulischen Leitungskreises (1) und andererseits mit einer zweiten Kammer (25) durch eine zweite Leitung (47) verbunden ist,
die zweite Kammer (25) steht außerdem in Verbindung mit einer dritten Leitung (32) eines zweiten hydraulischen Leitungskreises (2) und mit einer dritten Kammer (26) durch eine erste gemeinsame Öffnung in Form eines Sitzes,
die dritte Kammer (26) steht außerdem in Verbindung mit einer vierten Leitung (33) eines dritten hydraulischen Leitungskreises (3) und mit der vierten Kammer (27) durch eine zweite gemeinsame Öffnung in Form eines Sitzes,
die vierte Kammer (27) steht außerdem in Verbindung mit einer fünften Leitung (34), die zu einem Behälter (T) der hydraulischen Zentrale führt, und mit der fünften Kammer (28) durch eine dritte gemeinsame Öffnung in Form eines Sitzes,
die fünfte Kammer (28) steht außerdem in Verbindung mit einer sechsten Leitung (35) des dritten hydraulischen Leitungskreises (3) und mit der sechsten Kammer (29) durch eine vierte gemeinsame Öffnung in Form eines Sitzes,
die sechste Kammer (29) steht außerdem in Verbindung mit einer siebenten Leitung (36) des zweiten hydraulischen Leitungskreises (2) und mit der siebenten Kammer (30) durch eine achte Leitung (48), die siebente Kammer (30) steht außerdem in Verbindung mit einer neunten Leitung (12) des ersten hydraulischen Leitungskreises (1),
ein Gleitstück (49,50), das sich von der ersten bis zur siebenten Kammer erstreckt, in dem es durch die anderen Kammern hindurch verläuft, wobei das Gleitstück die Form eines quer hindurchverlaufenden Schaftes aufweist mit zwei Teilbereichen (57,58), die einen größeren Querschnitt haben, als der sonstige Schaftquerschnitt,
ein erstes Verschlusselement (51) in der zweiten Kammer (25), das auf dem Gleitstück (49) gleitend geführt ist und durch erste elastische Mittel (53) in einer Stellung gehalten wird, in der es eine erste gemeinsame Öffnung zwischen der zweiten und der dritten Kammer versperrt,
ein zweites Verschlusselement (52) in der sechsten Kammer (29), das auf dem Gleitstück (50) gleitend geführt ist und durch zweite elastische Mittel (54) in einer Stellung gehalten wird, in der es die vierte gemeinsame Öffnung zwischen der fünften und der sechsten Kammer versperrt,
weiterhin dritte und vierte Verschlusselemente (59,60) in der vierten Kammer (27), die gleitend auf dem Gleitstück (49,50) geführt sind und durch dritte elastische Mittel in einer Stellung gehalten werden, in der das dritte Verschlusselement (59) die zweite gemeinsame Öffnung zwischen der dritten und der vierten Kammer und das vierte Verschlusselement die dritte gemeinsame Öffnung zwischen der vierten und der fünften Kammer versperrt,
wobei die zweiten und achten Leitungen (47,48), welche die erste und die zweite Kammer, sowie die sechste und die siebente Kammer miteinander verbinden, in dem Gleitstück (49,50) untergebracht sind,
und wobei die Teile (57,58) des Gleitstücks (49,50) mit der größeren Querschnitt in einem ersten Ruhezustand in der dritten beziehungsweise fünften Kammer angeordnet sind und derart montiert sind, dass sie bei Bewegung des Gleitstücks in Richtung von der ersten zur siebenten Kammer das dritte und das zweite Verschlusselement (59,52) gegen die Kraft der zweiten und dritten elastischen Mittel derart verschieben, dass sich die Öffnungen öffnen und, bei Bewegung des Gleitstücks in Richtung von der siebenten zur ersten Kammer entsprechend das erste und das vierte Verschlusselement (51,60) gegen die Kraft der ersten und dritten elastischen Mittel (53,61) derart verschieben, dass sich die erste und die zweite Öffnung öffnen, ferner
Mittel zum Übertragen von Schubkraft (39,40,62,63,45,46), die in der ersten und in der siebenten Kammer vorgesehen sind, um, unter der Wirkung des Drucks des Fluids, das durch die erste Leitung (11) beziehungsweise die neunte Leitung (12) eintritt, einerseits den Zugang zur zweiten beziehungsweise sechsten Kammer zu verhindern, indem sie die zweite Leitung (47) beziehungsweise die achte Leitung (48) schließen, und andererseits das Gleitstück (49,50) in Richtung von der ersten zur siebenten Kammer beziehungsweise von der siebenten zur ersten Kammer zu schieben.

2. Hydraulische Schaltung nach Anspruch 1, dadurch gekennzeichnet, dass die Mittel zur Übertragung von Schubkraft (39,40;62,63;45,46) in der ersten und in der zweiten Kammer ein Stellglied (39,40) aufweisen mit einer Öffnung des Stellglieds und einem Widerlager an dem Stellglied, die Teil der Mittel zur Übertragung von Schubkraft sind, und eine Klappe (45,46), wobei die Öffnung des Stellglieds eine Führung für die Klappe (45,46) ermöglicht, wobei diese Klappe unter der Wirkung des Drucks des Fluids in der ersten Kammer (24) beziehungsweise siebenten Kammer (30) die zweite Leitung (47) beziehungsweise die achte Leitung (48) schließt, und dass das Widerlager (62,63) des Stellglieds die Klappe (45,46) gegen das Gleitstück (49,50) drückt, um so dieses in Richtung von der ersten zur siebenten Kammer beziehungsweise von der siebenten zur ersten Kammer bis zu einem dritten Widerlager (64) beziehungsweise vierten Widerlager (65) zu verschieben.

3. Wahlschaltung nach Anspruch 1 oder 2, dadurch gekennzeichnet, dass die Schaltung symmetrisch zur Mittelebene der vierten Kammer ausgebildet ist.

4. Wahlschaltung nach Anspruch 1, 2 oder 3, dadurch gekennzeichnet, dass die zweite und die dritte Leitung (47,48) die Form eines "T" aufweisen.

5. Wahlschaltung nach einem der vorhergehenden Ansprüche, dadurch gekennzeichnet, dass das Gleitstück aus zwei Teilen besteht.

## Claims

1. Hydraulic circuit selector module comprising a body in which walls define seven successive adjacent chambers (24,25,26,27,28,29,30); the first chamber (24) communicating both with a first pipe (11) of a first hydraulic circuit (1) and with the second chamber (25), by means of a second pipe (47), the second chamber (25) additionally communicating with a third pipe (32) of a second hydraulic circuit (2) and with the third chamber (26) by means of a first common opening in the form of a seat, the third chamber (26) additionally communicating with a fourth pipe (33) of a third hydraulic circuit (3) and with the fourth chamber (27) by means of a second common opening in the form of a seat, the fourth chamber (27) additionally communicating with a fifth pipe (34) leading to a tank (T) of a hydraulic unit and with the fifth chamber (28) by means of a third common opening in the form of a seat,
the fifth chamber (28) additionally communicating with a sixth pipe (35) of the third hydraulic circuit (3) and with the sixth chamber (29) by means of a fourth common opening in the form of a seat, the sixth chamber (29) additionally communicating with a seventh pipe (36) of the second hydraulic circuit (2) and with the seventh chamber (30) by means of an eighth pipe (48),
the seventh chamber (30) additionally communicating with a ninth pipe (12) of the first hydraulic circuit (1),
a slide (49,50) extending from the first to the seventh chamber, passing through the other chambers, this slide having a transversal rod and two parts (57, 58) with a cross section which is larger than the cross section of the rod,
a first obturator (51) in the second chamber (25), sliding on the slide (49), and held, by first elastic means (53), in a position in which it obturates the first common opening between the second and third chambers,
a second obturator (52) in the sixth chamber (29), sliding on the slide (50), and held, by second elastic means (54), in a position in which it obturates the fourth common opening between the fifth and sixth chambers, third and fourth obturators (59, 60) in the fourth chamber (27), sliding on the slide (49,50) and held, by third elastic means (61), in a position in which the third obturator (59) obturates the second common opening between the third and fourth chambers and the fourth obturator (60) obturates the third common opening between the fourth and fifth chambers,
the second and eighth pipes (47,48) providing for communication between the first and the second chamber and the sixth and the seventh chamber being provided in the slide (49,50),
the parts (57,58) of the slide (49,50) with larger cross sections being respectively disposed, in a first inoperative state, in the third and fifth chambers and being mounted so that when the slide is displaced in the direction from the first towards the seventh chamber, they respectively propel the third and the second obturator (59,52), against the second and third elastic means (54,61), so as to open the openings and, when the slide is displaced from the seventh towards the first chamber, they respectively propel the first and the fourth obturators, against the first and third elastic means (53,61), so as to open the first and second openings, propulsive means (39, 40, 62, 63, 45, 46) being provided in the first and seventh chambers in order, under the action of the pressure of a fluid entering via the first pipe (11), and the ninth pipe (12) respectively, both to prevent access to the second chamber, sixth chamber respectively by closing the second pipe (47) and the eighth pipe (48) respectively and to propel the slide (49,50) in the direction from the first to the seventh chamber, and from the seventh to the first chamber respectively.

2. Selector module according to claim 1 in which the means (39,40;62,63;45,46) comprise, in each of the first and seventh chambers, a cylinder (39, 40) equipped with a cylinder opening and a cylinder stop (62,63) which form part of the propulsive means, and a check valve (45,46), the cylinder opening providing for guiding of the check valve, the latter, under the action of the pressure of the fluid in the first chamber (24), and seventh chamber (30) respectively, coming to close the second pipe (47), and the eighth pipe (48) respectively, and the cylinder stop (62,63), pushing the check valve (45,46) against the slide (49, 50) for the purpose of thus displacing the slide in the direction from the first towards the seventh chamber, and from the seventh towards the first chamber respectively, up to a third stop (64), and a fourth stop (65) respectively.

3. Selector module according to claim 1 or 2, in which the selector module is mirror-symmetrical relative to a mid-plane of the fourth chamber.

4. Selector module according to claim 1, 2 or 3, in which the second and eighth pipes (47,48) are in the form of a T.

5. Selector module according to any one of the preceding claims, in which the slide is in two parts.
